Europäisches Patentamt

European Patent Office

Office européen des brevets

(19)

(11) EP 0 705 381 B1

(12) FASCICULE DE BREVET EUROPEEN

(45) Date de publication et mention
de la délivrance du brevet:
**22.01.1997 Bulletin 1997/04**

(51) Int Cl.6: **F01L 9/02**, F02D 13/02,
F02D 41/14, F02D 41/24

(21) Numéro de dépôt: 94931559.2

(22) Date de dépôt: 03.11.1994

(86) Numéro de dépôt international:
**PCT/EP94/03617**

**WO 95/13458 (18.05.1995 Gazette 1995/21)**

(54) **PROCEDE ET DISPOSITIF D'OPTIMISATION DU REMPLISSAGE EN AIR D'UN CYLINDRE DE MOTEUR A COMBUSTION INTERNE**

VERFAHREN UND VORRICHTUNG ZUR OPTIMIERUNG DER LUFTFÜLLUNG IN EINEM ZYLINDER EINER BRENNKRAFTMASCHINE

METHOD AND DEVICE FOR OPTIMIZING AIR FILLING IN AN INTERNAL COMBUSTION MOTOR CYLINDER

(84) Etats contractants désignés:
**DE ES GB IT**

(30) Priorité: **10.11.1993 FR 9313436**

(43) Date de publication de la demande:
**10.04.1996 Bulletin 1996/15**

(73) Titulaire: **SIEMENS AUTOMOTIVE S.A.**
**31036 Toulouse Cédex (FR)**

(72) Inventeur: **JANSE VAN VUUREN, Willem,**
**Nicolaas**
**Tabb, VA 23693 (US)**

(74) Mandataire: **Fuchs, Franz-Josef, Dr.-Ing.**
**Postfach 22 13 17**
**80503 München (DE)**

(56) Documents cités:
**US-A- 4 517 948**       **US-A- 4 729 359**
**US-A- 5 193 494**

• **'Vehicle electronics in the 90's' Octobre 1990 ,
SOCIETY OF AUTOMOTIVE ENGINEERS ,
WARRENDALE USA , XP223564 voir page 326 -
page 328**

## Description

La présente invention est relative à un procédé d'optimisation du remplissage en air d'un cylindre de moteur à combustion interne sous forte charge et, plus particulièrement, à un tel procédé mis en oeuvre à l'aide de moyens permettant de faire varier l'instant de fermeture d'une soupape d'admission associée à ce cylindre. La présente invention a aussi pour but de fournir un dispositif pour la mise en oeuvre de ce procédé.

Classiquement la "levée" d'une soupape, d'admission ou d'échappement, est commandée par une came solidaire du vilebrequin du moteur ou d'un arbre à cames tournant en synchronisme avec ce dernier. La liaison mécanique établie entre chaque soupape et la came de commande associées est desmodromique et les "événements" que constituent l'ouverture ou la fermeture de la soupape interviennent à des moments prédéterminés et invariables du cycle de fonctionnement du moteur, ou "cycle moteur".

On envisage aujourd'hui de faire intervenir ces événements de manière variable et commandée, pour régler par exemple la quantité d'air ou de mélange air/carburant aspirée par un cylindre du moteur, ou bien la quantité de gaz de combustion retenue dans ce cylindre.

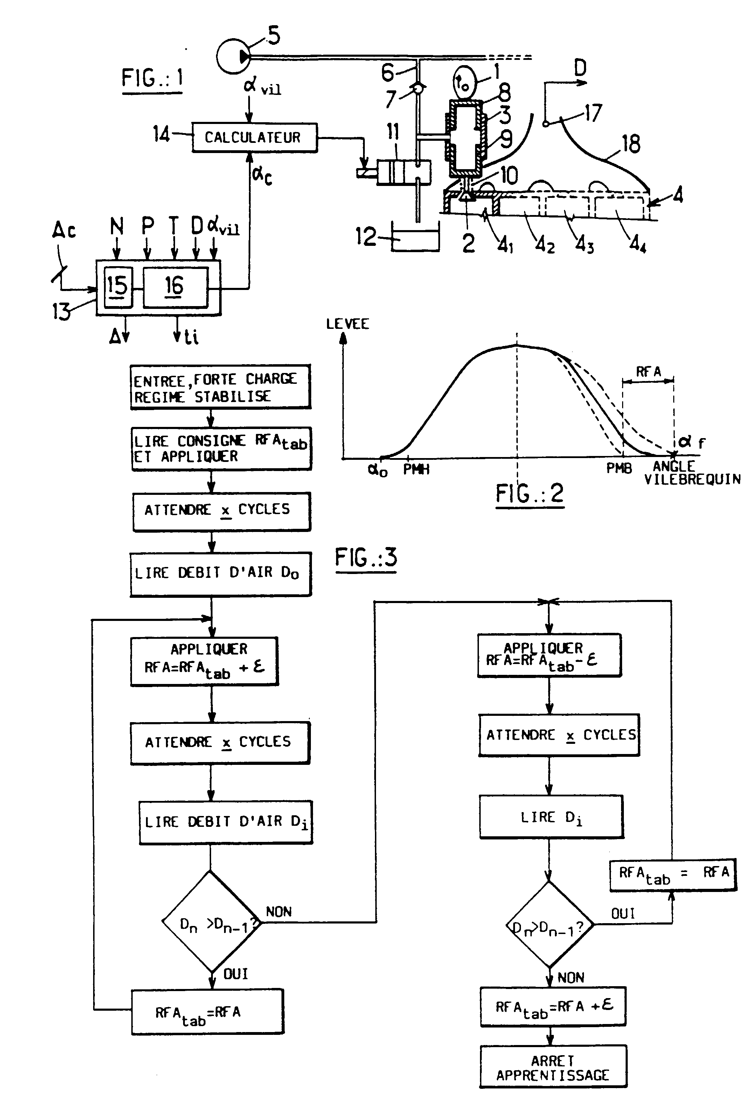

Ceci suppose que l'on dispose de moyens permettant de commander avec toute la souplesse nécessaire la "levée" des soupapes, souplesse absente des mécanismes à cames classiques. Pour ce faire on a conçu notamment des dispositifs électromécaniques, à électroaimant par exemple, et des dispositifs mécano-hydrauliques tels que celui représenté schématiquement à la figure 1 du dessin annexé.

Ce dernier dispositif comprend, comme représenté, une came classique 1 agissant sur une soupape 2 par l'intermédiaire d'une chambre 3, fixe par rapport au moteur 4, à quatre cylindres $4_1$, $4_2$, $4_3$, $4_4$ par exemple. La chambre 3 est remplie d'un liquide sous pression tel que de l'huile de graissage du moteur délivrée par une pompe à huile 5, à travers un conduit 6 équipé d'un clapet anti-retour 7.

La chambre 3 est fermée par deux pistons d'extrémité 8 et 9. Le piston 8 est normalement chargé contre la came 1 par la pression d'huile établie dans la chambre. La soupape 2 est solidaire du piston 9 et chargée, contre un siège prévu dans le cylindre $4_1$ associé, par un ressort 10 suffisamment puissant pour que la seule pression de l'huile dans la chambre 9 ne puisse provoquer une "levée" de soupape. Une électrovanne 11 à deux voies et deux positions permet de contrôler la pression d'huile dans la chambre, par mise en communication sélective de celle-ci avec une bâche 12 à l'air libre. De tels dispositifs sont bien connus et on pourra se reporter aux brevets US-A-4 133 332, US-A-4 615 306 et US-A-4 796 573 pour plus de détail les concernant.

Le fonctionnement du mécanisme représenté à la figure 1 s'établit alors comme suit : quand l'électrovanne 11 est commandée pour être dans la position représentée à la figure, la chambre 3 est isolée de la bâche 12 et le clapet anti-retour 6 empêche tout reflux d'huile vers le conduit 6. L'incompressibilité de l'huile contenue dans la chambre 3 a pour résultat de provoquer la transmission des déplacements du piston 8 sous la poussée de la came 1, au piston 9 et à la soupape 2. Celle-ci subit alors les déplacements que lui impose la came 1. Si on actionne l'électrovanne de manière à mettre en communication la chambre 3 avec la bâche 12, la pression dans cette chambre tombe et celle-ci se vide, au moins partiellement, dans la bâche quand la came 1 fait descendre le piston 8. Il n'y a plus alors transmission des déplacements du piston 8 à la soupape qui reste appliquée sur son siège en position fermée.

On comprend qu'en commandant de manière appropriée l'excitation de l'électrovanne 11, on peut faire varier les instants d'ouverture ou de fermeture de la soupape 2, le mécanisme décrit présentant un temps de réponse court compatible avec la durée des cycles de fonctionnement du moteur, même à régime élevé.

Cette commande suppose qu'un calculateur 13 associé au moteur, élabore et délivre à un autre calculateur 14, de commande de levée de soupape, une valeur de consigne $\alpha_c$ repérant, par exemple, la position angulaire du vilebrequin à laquelle un "événement soupape" commandé, tel que l'ouverture ou la fermeture de cette soupape, doit intervenir. Les véhicules automobiles modernes sont couramment équipés d'un calculateur d'allumage et/ou d'injection alimenté par des capteurs d'angle du vilebrequin $\alpha_{vil}$ et/ou de régime moteur N, de pression P dans le collecteur d'admission du moteur, de température T du liquide de refroidissement, de position Ac de la pédale d'accélérateur etc... pour élaborer des commandes de l'angle d'avance à l'allumage A, du temps d'ouverture $t_i$ d'un injecteur de carburant, etc... Un tel calculateur, référencé 13 à la figure 1, est donc susceptible d'élaborer à partir de certains des signaux reçus des capteurs précités, et notamment du signal représentatif du régime du moteur, la valeur de consigne $\alpha_c$ précitée repérant la position angulaire du vilebrequin à laquelle doit intervenir l'ouverture ou la fermeture de la soupape, en fonction d'une ou plusieurs stratégies mises en mémoire dans le calculateur et exécutées par celui-ci pour régler la quantité d'air aspirée par un cylindre pendant le temps d'ouverture d'une soupape d'admission de ce cylindre.

Parmi ces stratégies, l'une consiste à commander la valeur $\alpha_c$ de la position angulaire du vilebrequin à laquelle doit intervenir la fermeture de la soupape d'admission, sous forte charge du moteur. On entend par "charge" la quantité d'air ou de mélange air/carburant introduite dans les cylindres du moteur, à chaque cycle de fonctionnement de celui-ci. Cette quantité est fonction du "remplissage" des cylindres ou du "rendement volumétrique", suivant l'expression anglo-saxonne, c'est-à-dire de la capacité du moteur à fonctionner en pompe, capacité qui varie en fonction de différents effets dynamiques tels que la propagation d'ondes de pression dans le collecteur d'admission et les cylindres, qui sont fonction du régime du moteur. Il est clair que l'on a intérêt à optimiser le couple que peut fournir un moteur à un régime donné. Pour ce faire, il faut optimiser le "remplissage" des cylindres du moteur puisqu'il est clair que le couple est fonction de l'énergie que l'on tire de la combustion du mélange air/carburant contenu dans ces cylindres.

On a représenté en trait plein à la figure 2 du dessin annexé le graphe de la "levée" classique d'une soupape d'admission, en fonction de la position angulaire correspondante du vilebrequin du moteur. On a repéré également les positions angulaires d'un point mort haut (PMH) et d'un point mort bas (PMB) d'un piston circulant dans un cylindre associé, pendant le temps d'admission d'un cylindre formant partie d'un moteur à explosion à quatre temps, par exemple. Grâce au dispositif de commande de levée variable de soupape représenté à la figure 1, il est possible de faire varier les positions d'ouverture $\alpha_o$ et de fermeture $\alpha_f$ de la soupape d'admission. C'est ainsi que, pour optimiser le remplissage du cylindre, on a pu déterminer que l'angle $\alpha_f$ devait varier entre une position voisine du point mort bas PMB à bas régime et une position retardée d'un retard RFA à la fermeture, d'autant plus important que l'on évolue vers des régimes élevés correspondant à de fortes charges.

On peut alors penser à conserver dans une table en mémoire 15 du calculateur 13, diverses valeurs d'un retard $RFA_{tab}$ à la fermeture en fonction du régime N du moteur, une électronique de commande 16 de ce calculateur interrogeant cette mémoire lors du calcul de l'angle de consigne $\alpha_c$ de la fermeture de cette soupape. Malheureusement, une telle solution n'est pas satisfaisante du point de vue "robustesse" car elle ne permet pas l'adaptation de la table des retards RFA à chacun des exemplaires d'un moteur fabriqué en grande série, alors que ceux-ci présentent des différences de caractéristiques du fait des tolérances de fabrication, ni l'adaptation de cette table au vieillissement de chaque moteur.

On a aussi proposé, par exemple dans la demande de brevet EP-A-0 368 675, d'optimiser le remplissage en air des cylindres en adaptant les valeurs du retard à la fermeture de la soupape contenues dans une table mémorisée, au moyen d'un capteur propre à détecter la vitesse du flux d'air entrant dans le cylindre. Cependant, un tel système exige la présence d'au moins un capteur spécifique, et dans le cas de moteurs multicylindres possédant des conduits d'admission séparés, d'un capteur par cylindre, ce qui augmente le coût du système et diminue sa fiabilité.

La présente invention a pour but de fournir un procédé et un dispositif d'optimisation du remplissage en air d'un cylindre de moteur à combustion interne sous forte charge, qui ne présente pas ces inconvénients.

On atteint ces buts de l'invention, ainsi que d'autres qui apparaîtront à la lecture de la description qui va suivre, avec un procédé du type dans lequel on tire d'une table en mémoire une valeur d'un retard à la fermeture d'une soupape d'admission associée à un cylindre, en fonction du régime du moteur et on commande la fermeture de cette soupape en fonction de ce retard, ce procédé étant remarquable en ce que, lors d'un fonctionnement en régime stabilisé sous forte charge, on fait varier progressivement par pas le retard de fermeture appliqué, à partir de celui mis en mémoire, on mesure et on compare la charge du cylindre avant et après chacun des pas successifs et on actualise la valeur du retard en mémoire quand la comparaison révèle une croissance de ladite charge, jusqu'à la détection d'un maximum pour celle-ci.

Une telle procédure de mise à jour de la table des valeurs du retard à la fermeture de la soupape d'admission, exécutée périodiquement par exemple, permet de mettre en mémoire des valeurs du retard qui tiennent compte des caractéristiques particulières de chaque exemplaire de moteurs fabriqués en série et dues aux tolérances de fabrication, ainsi que du vieillissement spécifique de chaque moteur.

Pour la mise en oeuvre du procédé selon l'invention, celle-ci fournit un dispositif comprenant des moyens de commande de levée variable d'une soupape d'admission d'un cylindre de moteur à combustion interne et des moyens de mémoire chargés avec des valeurs d'un retard à la fermeture de ladite soupape sous forte charge, en fonction du régime du moteur, ce dispositif comprenant en outre un capteur délivrant un signal représentatif de la charge du moteur, des moyens délivrant un signal représentatif de la pleine ouverture du papillon des gaz, des moyens sensibles à ce signal de pleine ouverture pour commander, en régime stabilisé du moteur sous forte charge, une variation progressive par pas du retard à la fermeture appliquée à la soupape, pour comparer les charges mesurées par le capteur de charge avant et après chacun des pas successifs de la variation, et pour actualiser la valeur du retard mis en mémoire au régime stabilisé actuel, quand lesdits moyens de comparaison détectent une croissance de la charge mesurée, jusqu'à la détection d'un maximum pour celle-ci.

D'autres caractéristiques et avantages de la présente invention apparaîtront à la lecture de la description qui va suivre et à l'examen du dessin annexé dans lequel :

- la figure 1 représente schématiquement un dispositif pour la mise en oeuvre du procédé selon l'invention, déjà partiellement décrit en préambule de la présente description,
- la figure 2 représente un graphe décrit dans ledit préambule, et
- la figure 3 est un organigramme du procédé d'optimisation suivant l'invention.

On se réfère à la figure 3 du dessin annexé où l'organigramme représenté est avantageusement celui d'un programme exécuté par l'électronique de calcul 16 du calculateur 13. L'entrée dans le programme est déterminée par l'apparition et la détection d'un fonctionnement sous forte charge du moteur 4, en régime moteur N stabilisé. L'apparition de ces conditions est déterminée par le calculateur sur la base des signaux reçus d'un capteur de régime N classique et d'un capteur émettant un signal représentatif de la pleine ouverture du papillon des gaz, par exemple un contact "Pied à fond" ou une valeur du signal d'enfoncement de la pédale d'accélérateur $A_c$ supérieure à un seuil prédéterminé. Le niveau de charge à partir duquel celle-ci est considérée comme "forte" par le procédé suivant l'invention, pourra être choisie par l'homme de métier à partir de mesures faites au banc par exemple.

Les conditions de mise en oeuvre du procédé d'optimisation suivant l'invention étant reconnues par l'électronique 16, celles-ci interrogent la mémoire 15 pour en tirer la valeur du retard $RFA_{tab}$ à la fermeture à prendre en compte dans le calcul de la consigne $\alpha_c$ de position angulaire de fermeture de la soupape, au régime N mesuré. L'électronique émet alors une consigne $\alpha_c$ intégrant le retard à la fermeture lue dans la table en mémoire. L'électronique 16 lit ensuite un signal représentatif de la charge du moteur, par exemple le débit d'air $D_0$ mesuré par un capteur de débit 17 placé dans le collecteur d'admission 18 du moteur, après un délai de stabilisation de ce débit compté par exemple en cycles moteur. Le nombre $\underline{x}$ de cycles moteur sera choisi en fonction d'observations faites au banc sur le temps nécessaire à la stabilisation du débit d'air aspiré, en l'absence de toute variation sensible du régime du moteur.

Après cette lecture du débit d'air $D_0$, le programme se poursuit par une incrémentation du retard pris en compte dans le calcul de la consigne $\alpha_c$ soit :

$$RFA = RFA_{tab} + \varepsilon$$

$\varepsilon$ étant un incrément dont l'évaluation est du domaine des connaissances de l'homme de métier. L'électronique 16 lit ensuite le débit d'air $D_i$ ($i = 1$) mesuré par le capteur 17, après un délai de stabilisation de ce débit de x cycles moteur. L'électronique 16 exécute ensuite un test basé sur la comparaison des débits $D_1$ et $D_0$. Si le débit $D_1$ est plus petit que $D_0$, c'est que la croissance recherchée du débit ne peut être atteinte par une incrémentation du retard RFA. Le programme décrémente alors le retard à partir de la valeur lue en mémoire et l'électronique de calcul 16 prend ensuite en compte dans le calcul de la position angulaire de fermeture de la soupape d'admission le retard :

$$RFA = RFA_{tab} - \varepsilon$$

Après application de la position ainsi calculée, et l'écoulement de x cycles moteur pour stabilisation, l'électronique lit le débit D fourni par le capteur 17 et compare ce débit au débit $D_0$ observé après l'application initiale du retard $RFA_{tab}$. Si aucune croissance de débit n'est observée, c'est que le retard appliqué est bien celui qui assure le débit D maximum. La valeur $RFA_{tab}$ en mémoire est alors confirmée et le programme "d'apprentissage" de la valeur RFA à conserver en mémoire est arrêté.

Si l'incrémentation de la valeur RFA précédemment appliquée fait apparaître une croissance du débit, il y a actualisation de la valeur $RFA_{tab}$ en mémoire et bouclage sur une nouvelle incrémentation de RFA, avec incrémentation correspondante de la valeur mise en mémoire, ceci jusqu'à ce que l'on cesse d'observer une croissance du débit.

Le programme applique une stratégie de bouclage et d'actualisation similaire dans le cas de la décrémentation de la valeur RFA décrite ci-dessus, comme cela apparaît sur l'organigramme de la figure 3.

Le programme d'apprentissage de la valeur $RFA_{tab}$ peut être exécuté automatiquement tout au long de la "vie" du moteur, à une fréquence compatible avec un suivi fidèle de l'évolution des caractéristiques de celui-ci, de manière à assurer constamment l'optimisation du remplissage en air du moteur sous forte charge, et donc du couple alors délivré par celui-ci. L'adaptation des valeurs du retard $RFA_{tab}$ en mémoire aux caractéristiques particulières du moteur et à l'évolution de ces caractéristiques par vieillissement du moteur est donc parfaitement assurée.

Bien entendu l'invention n'est pas limitée au mode de réalisation décrit et représenté qui n'a été donné qu'à titre d'exemple. Ainsi, le suivi du "remplissage" du cylindre du moteur pourrait être assuré par d'autres capteurs qu'un débitmètre, par exemple un capteur de couple de sortie du moteur, ou encore un capteur de pression associé à chaque chambre de combustion. De même, la procédure d'optimisation du retard suivant l'invention pourrait être adaptée par l'homme de métier à des "événements soupape" autres que la position angulaire de fermeture d'une soupape d'admission.

Incidemment, on remarquera que l'invention se prête avantageusement à une mise en oeuvre à l'aide d'un calculateur 13 d'injection et/ou d'allumage opérant à l'aide d'une cartographie dans le système "débit-régime" plutôt que "pression-régime", puisqu'alors on peut se passer de capteur de pression dans le collecteur d'admission du moteur.

## Revendications

1. Procédé d'optimisation du remplissage en air d'un cylindre de moteur à combustion interne sous forte charge, suivant lequel on tire d'une table en mémoire une valeur ($RFA_{tab}$) d'un retard à la fermeture d'une soupape d'admission (2) associée à ce cylindre, en fonction du régime (N) du moteur et on commande la fermeture de cette soupape en fonction de ce retard, procédé caractérisé en ce que, lors d'un fonctionnement en régime stabilisé sous forte charge, on fait varier progressivement par pas le retard de fermeture (RFA) appliqué, à partir de celui mis en mémoire, on mesure et on compare la charge du cylindre avant et après chacun des pas successifs et on actualise la valeur ($RFA_{tab}$) du retard en mémoire quand la comparaison révèle une croissance de ladite charge, jusqu'à la détection d'un maximum pour celle-ci.

2. Dispositif pour la mise en oeuvre du procédé conforme à la revendication 1, comprenant des moyens (1,3,11,14) de commande de levée variable d'une soupape d'admission (2) d'un cylindre ($4_1$) de moteur (4) à combustion interne et des moyens (15) de mémoire chargés avec des valeurs ($RFA_{tab}$) d'un retard à la fermeture de ladite soupape sous forte charge, en fonction du régime (N) du moteur, caractérisé en ce qu'il comprend un capteur (17) délivrant un signal représentatif de la charge du moteur, des moyens délivrant un signal représentatif de la pleine ouverture du papillon des gaz, des moyens (16) sensibles à ce signal de pleine ouverture pour commander, en régime (N) stabilisé du moteur sous forte charge, une variation progressive par pas du retard à la fermeture (RFA) appliqué à la soupape, pour comparer les charges mesurées par le capteur (17) avant et après chacun des pas successifs de la variation, et pour actualiser la valeur du retard ($RFA_{tab}$) mis en mémoire, au régime (N) stabilisé actuel, quand lesdits moyens de comparaison détectent une croissance de la charge mesurée, jusqu'à la détection d'un maximum pour celle-ci.

3. Dispositif conforme à la revendication 2, caractérisé en ce que le capteur délivrant un signal représentatif de la charge du moteur est un débitmètre (17) placé dans un collecteur d'admission d'air du moteur.

4. Dispositif conforme à la revendication 2, caractérisé en ce que le capteur délivrant un signal représentatif de la charge du moteur est un capteur du couple disponible sur l'arbre de sortie du moteur.

5. Dispositif conforme à l'une quelconque des revendications 2 à 4, caractérisé en ce que les moyens de commande d'une variation progressive par pas du retard à la fermeture de la soupape sont des moyens logiciels intégrés à des moyens électroniques de calcul (16) de la position de fermeture de la soupape.

6. Dispositif conforme à la revendication 5, caractérisé en ce que lesdits moyens électroniques (16) font partie d'un calculateur (13) d'angle d'avance à l'allumage et/ou du temps d'injection de carburant du moteur à combustion interne.

**Patentansprüche**

1. Verfahren zum Optimieren der Luftfüllung eines Zylinders eines Verbrennungsmotors bei starker Ladung, bei dem einer Speichertabelle ein Verzögerungswert ($RFA_{tab}$) für das Schließen eines diesem Zylinder zugeordneten Einlaßventils (2) in Abhängigkeit von der Motordrehzahl (N) entnommen wird und das Schließen dieses Ventils in Abhängigkeit von dieser Verzögerung gesteuert wird, dadurch gekennzeichnet, daß während eines Betriebs mit stabilisierter Drehzahl bei starker Ladung die eingesetzte Schließverzögerung (RFA) ausgehend von der gespeicherten schrittweise fortschreitend geändert wird, daß die Last des Zylinders vor und nach jedem der aufeinanderfolgenden Schritte gemessen und verglichen wird und daß der gespeicherte Verzögerungswert ($RFA_{tab}$) aktualisiert wird, wenn der Vergleich einen Anstieg der Ladung anzeigt, bis ein Maximum derselben festgestellt wird.

2. Vorrichtung zum Durchführen des Verfahrens nach Anspruch 1 mit Mitteln (1, 3, 11, 14) zum Steuern des veränderlichen Hubes eines Einlaßventils (2) eines Zylinders ($4_1$) des Verbrennungsmotors (4) und Speichermitteln (15), die mit Verzögerungswerten ($RFA_{tab}$) für das Schließen dieses Ventils bei starker Ladung in Abhängigkeit von der Motordrehzahl (N) versehen sind, dadurch gekennzeichnet, daß sie aufweist: einen Fühler (17), der ein die Motorladung darstellendes Signal abgibt, Mittel, die ein die vollständige Öffnung der Drosselklappe darstellendes Signal abgeben, und Mittel (16), die auf dieses Öffnungssignal ansprechen, um bei stabilisierter Motordrehzahl (N) und starker Ladung eine schrittweise fortschreitende Änderung der auf das Ventil ausgeübten Schließverzögerung (RFA) zu steuern, um die von dem Fühler (17) gemessenen Ladungen vor und nach jedem der aufeinanderfolgenden Änderungsschritte zu vergleichen und um den gespeicherten Verzögerungswert ($RFA_{tab}$) bei stabilisierter Ist-Drehzahl (N) zu aktualisieren, wenn die Vergleichsmittel einen Anstieg der gemessenen Ladung feststellen, bis ein Maximum für diese festgestellt wird.

3. Vorrichtung nach Anspruch 2, dadurch gekennzeichnet, daß der Fühler, der ein die Motorladung darstellendes Signal abgibt, ein Durchsatzmesser (17) ist, der in dem Luftansaugrohr des Motors angeordnet ist.

4. Vorrichtung nach Anspruch 2, dadurch gekennzeichnet, daß der Fühler, der ein die Motorladung darstellendes Signal abgibt, ein Fühler für das Drehmoment ist, das an der Abtriebswelle des Motors zur Verfügung steht.

5. Vorrichtung nach einem der Ansprüche 2 bis 4, dadurch gekennzeichnet, daß die Mittel zum Steuern einer schrittweise fortschreitenden Änderung der Schließverzögerung des Ventils Logikmittel sind, die in elektronischen Mitteln (16) zum Berechnen der Schließstellung des Ventils integriert sind.

6. Vorrichtung nach Anspruch 5, dadurch gekennzeichnet, daß die elektronischen Mittel (16) einen Teil eines Rechners (13) für den Voreilwinkel der Zündung und/oder die Kraftstoffeinspritzzeit des Verbrennungsmotors bilden.

**Claims**

1. Method for optimizing the air filling of a cylinder of an internal combustion engine when the engine is highly charged, according to which method a value ($ICL_{tab}$) for the closure lag of an inlet valve (2) associated with this cylinder is drawn from a table stored in memory as a function of the speed (N) of the engine, and this valve is made to close as a function of this lag, the method being characterized in that during running at steady speed with a large charge, the closure lag (ICL) applied is varied progressively stepwise from the one stored in memory, the charge in the cylinder before and after each of the successive steps is measured and compared and the value ($ICL_{tab}$) of the lag stored in memory is updated when the comparison reveals an increase in the said charge, until the charge detected reaches a maximum.

2. Device for the implementation of the method in accordance with Claim 1, comprising means (1, 3, 11, 14) for controlling the variable lift of an inlet valve (2) of a cylinder ($4_1$) of an internal combustion engine (4), and memory means (15) loaded with values ($ICL_{tab}$) for the closure lag of the said valve when the engine is highly charged, as a function of the speed (N) of the engine, characterized in that it comprises a sensor (17) delivering a signal which represents the charge of the engine, means delivering a signal which represents wide open throttle, means (16) sensitive to this wide-open signal in order, when the engine is at a steady speed (N) and highly charged, to demand a progressive stepwise variation in the closure lag (ICL) applied to the valve, to compare the charges measured by the sensor (17) before and after each of the successive steps in the variation, and to update the lag value ($ICL_{tab}$) stored in memory at the current steady speed (N) when the said comparison means detect an increase in the measured charge, until it is detected that this has reached a maximum.

3. Device in accordance with Claim 2, characterized in that the sensor delivering a signal which represents the engine charge is a flowmeter (17) placed in an air inlet manifold of the engine.

4. Device in accordance with Claim 2, characterized in that the sensor delivering a signal which represents the engine charge is a sensor which senses the available torque on the output shaft of the engine.

5. Device in accordance with any one of Claims 2 to 4, characterized in that the means for demanding a progressive stepwise variation in the closure lag of the valve are software means built into electronic means (16) for calculating the position of closure of the valve.

6. Device in accordance with Claim 5, characterized in that the said electronic means (16) form part of an ignition advance angle and/or fuel injection period computer (13) for the internal combustion engine.

FIG.: 1

CALCULATEUR

$\alpha_{vil}$

$\alpha_c$

14

5

6

7

1

8

3

9

10

11

12

2

$4_1$ $4_2$ $4_3$ $4_4$

4

D

17

18

Ac

N P T D $\alpha_{vil}$

15  16

13

$\Delta$  ti

LEVEE

RFA

$\alpha_o$ PMH

PMB

ANGLE VILEBREQUIN

$\alpha_f$

FIG.: 2

FIG.: 3

ENTREE, FORTE CHARGE
REGIME STABILISE

LIRE CONSIGNE RFA$_{tab}$
ET APPLIQUER

ATTENDRE $\underline{x}$ CYCLES

LIRE DEBIT D'AIR $D_o$

APPLIQUER
RFA=RFA$_{tab}$ + $\varepsilon$

ATTENDRE $\underline{x}$ CYCLES

LIRE DEBIT D'AIR $D_i$

$D_n > D_{n-1}$?

NON

OUI

RFA$_{tab}$=RFA

APPLIQUER
RFA=RFA$_{tab}$ - $\varepsilon$

ATTENDRE $\underline{x}$ CYCLES

LIRE $D_i$

$D_n > D_{n-1}$?

OUI

RFA$_{tab}$ = RFA

NON

RFA$_{tab}$=RFA + $\varepsilon$

ARRET
APPRENTISSAGE